(19) **Europäisches Patentamt / European Patent Office / Office européen des brevets**

(11) **EP 3 889 005 A1**

(12) **EUROPEAN PATENT APPLICATION**

(43) Date of publication:
06.10.2021 Bulletin 2021/40

(51) Int Cl.:
*B62D 5/04* (2006.01)     *B62D 6/00* (2006.01)

(21) Application number: 20217897.6

(22) Date of filing: 30.12.2020

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.03.2020 JP 2020061235

(71) Applicant: **TOYOTA JIDOSHA KABUSHIKI KAISHA**
**Toyota-shi, Aichi-ken, 471-8571 (JP)**

(72) Inventors:
• **KURIBAYASHI, Takuya**
**Aichi-ken, 471-8571 (JP)**
• **NAKATA, Daisuke**
**Aichi-ken, 471-8571 (JP)**

(74) Representative: **J A Kemp LLP**
**14 South Square**
**Gray's Inn**
**London WC1R 5JJ (GB)**

(54) **VEHICLE STEERING SYSTEM**

(57)     A vehicle steering system includes a first tire-wheel assembly steering device (12), a second tire-wheel assembly steering device (12), and a controller (16; 18). The controller (16; 18) is configured to control the first tire-wheel assembly steering device (12) and the second tire-wheel assembly steering device (12) such that a steered position of each of the right tire-wheel assembly (10FR; 10RR) and the left tire-wheel assembly (10FL; 10RL) matches a target steered position. The controller (16; 18) is configured to execute, when a turning index indicating severity of turning exceeds a set threshold value, a steered position change process of changing a steered position of one of the right tire-wheel assemblies (10FR; 10RR) and the left tire-wheel assemblies (10FL; 10RL) such that turning characteristics of the vehicle have a stronger understeer tendency compared with a case where the turning index does not exceed the set threshold value.

FIG. 1

**Description**

BACKGROUND OF THE INVENTION

1. Field of the Invention

The present invention relates to a vehicle steering system mounted on a vehicle.

2. Description of Related Art

As a vehicle steering system (hereinafter, may be referred to as "laterally independent steering system") provided with a pair of tire-wheel assembly steering devices that can independently steer right and left tire-wheel assemblies, there is a technique described in Japanese Unexamined Patent Application Publication No. 2009-101858 (JP 2009-101858 A), for example. In the above technique, the stability of turning behavior of the vehicle is improved based on the lateral force acting on each tire-wheel assembly and the tire-wheel assembly rotation speed of each tire-wheel assembly (hereinafter, may be simply referred to as "tire-wheel assembly speed").

SUMMARY OF THE INVENTION

The laterally independent steering system is still under development, and there is much room for improvement, especially regarding steering control of the right and left tire-wheel assemblies. Therefore, by making improvements, it is possible to improve the practicality of the laterally independent steering system. The present invention provides a highly practical laterally independent steering system.

A first aspect of the present invention relates to a vehicle steering system. The vehicle steering system includes a first tire-wheel assembly steering device configured to steer the left tire-wheel assembly of a vehicle, a second vehicle configured to steer the right tire-wheel assembly of the vehicle, and controller. The controller is configured to determine a target steered position that is a steered position targeted to be realized in each of the right tire-wheel assembly and the left tire-wheel assembly based on a steering request to the vehicle, and configured to control the first tire-wheel assembly steering device and the second tire-wheel assembly steering device such that the steered position of each of the right tire-wheel assembly and the left tire-wheel assembly matches the target steered position. The controller is configured to execute, when a turning index indicating severity of turning exceeds a set threshold value, a steered position change process of changing a steered position of one of the right tire-wheel assembly and the left tire-wheel assembly such that turning characteristics of the vehicle have a stronger understeer tendency compared with a case where the turning index does not exceed the set threshold value.

With the vehicle steering system (hereinafter, may be simply referred to as "steering system") according to the first aspect of the present invention, when a severe turn is performed, the steered position change process is executed, which improves turning stability of the vehicle.

The "severe turn" in the first aspect means, for example, a turn in which a centrifugal force acting on the vehicle body during the turn is large, that is, a turn with a small turning radius that is performed at a high vehicle traveling speed. Thus, for example, a lateral acceleration generated in the vehicle body, a yaw rate of the vehicle, and the like can be adopted as the "turning index" for indicating the severity of turning. Moreover, in a severe turn, a relatively large difference occurs between loads of the vehicle body shared by the right and left tire-wheel assemblies, that is, between the shared vehicle body loads of the right and left tire-wheel assemblies, so the difference between the shared vehicle body loads (hereinafter, may be referred to as "shared load difference") can also be adopted as the turning index. Furthermore, as the shared vehicle load increases, the steering force that is a force for steering the tire-wheel assembly, specifically, a steering holding force that is a steering force required to maintain the steered position of the tire-wheel assembly at the target steered position increases. In view of this, the difference between the steering forces applied to the right and left tire-wheel assemblies during turning (hereinafter, may be referred to as "steering force difference") can be adopted as the turning index.

In the first aspect, the one of the right tire-wheel assembly and the left tire-wheel assembly may be a turning outer tire-wheel assembly.

In the first aspect, the vehicle may have four tire-wheel assemblies including right front, left front, right rear, and left rear tire-wheel assemblies, and the right tire-wheel assembly and the left tire-wheel assembly may represent the right front tire-wheel assembly and the left front tire-wheel assembly. The controller may be configured to make a steered position of one of the right front tire-wheel assembly and the left front tire-wheel assembly smaller in the steered position change process.

In the first aspect, the vehicle may have four tire-wheel assemblies including right front, left front, right rear, and left rear tire-wheel assemblies, and the right tire-wheel assembly and the left tire-wheel assembly may represent the right and left rear tire-wheel assemblies. The controller may be configured to make a steered position of one of the right rear tire-wheel assembly and the left rear tire-wheel assembly larger in the steered position change process.

In the first aspect, the controller may be configured to control steering forces generated by the first tire-wheel assembly steering device and the second tire-wheel assembly steering device to perform a control such that the steered position of each of the right tire-wheel assembly and the left tire-wheel assembly matches the target steered position.

In the first aspect, the first tire-wheel assembly steering device may include a first electric motor serving as a drive source and a first motion conversion mechanism configured to convert a motion of the first electric motor into a steering motion of the tire-wheel assembly. In the first aspect, the second tire-wheel assembly steering device may include a second electric motor serving as a drive source and a second motion conversion mechanism configured to convert a motion of the second electric motor into a steering motion of the tire-wheel assembly. The controller may be configured to control a supply current to each of the first electric motor and the second electric motor to control the steering forces generated by the first tire-wheel assembly steering device and the second tire-wheel assembly steering device. In such a steering system, instead of the steering force difference, a difference between power exerted by the first electric motor of the first tire-wheel assembly steering device and power exerted by the second electric motor of the second tire-wheel assembly steering device (hereinafter, may be referred to as "motor power") or a difference between supply current supplied to the first electric motor of the first tire-wheel assembly steering device and supply current supplied to the second electric motor of the second tire-wheel assembly steering device can be adopted as the turning index. For example, when the difference in motor power or the difference in supply current is adopted as the turning index, a special sensor such as a lateral acceleration sensor or a yaw rate sensor is not required, unlike the case where the lateral acceleration or the yaw rate is adopted.

In the first aspect, the controller may be configured to change a steering force of the first tire-wheel assembly steering device or the second tire-wheel assembly steering device that is configured to steer one of the right tire-wheel assembly and the left tire-wheel assembly so as to change the steered position of the one of the right tire-wheel assembly and the left tire-wheel assembly in the steered position change process.

The "steered position of the tire-wheel assembly" in the steering system of the first aspect of the present invention represents simply a steered angle of the tire-wheel assembly, and can be considered as the amount of change in the steered position from a position in a state in which the vehicle is traveling straight. Thus, the wording "steered position is large/small" is synonymous with "steered angle is large/small", and can be regarded to represent the magnitude of separation of the steered position from a straight traveling state position that is a steered position attained when the vehicle is traveling straight. The "target steered position" is determined based on the steering request, and may be determined based on, for example, the operation amount of a steering operation member such as a steering wheel. Further, when the vehicle is being autonomously driven (automatically steered), the target steered position may be determined based on an instruction from the autonomous driving system.

The mode in which the execution of the understeer control is determined based on the shared load difference or the steering force difference can be considered as a mode that looks as if the turning of the vehicle is stabilized by using lateral force compliance steering. In view of this, the tire-wheel assembly with its steered position changed in the understeer control (hereinafter, may be referred to as "changed tire-wheel assembly") is preferably the turning outer tire-wheel assembly with larger shared vehicle body load, out of the right and left tire-wheel assemblies, that is, a tire-wheel assembly that is farther from a turning center of the vehicle.

The understeer control may be performed such that the steered position of the changed tire-wheel assembly becomes smaller when a pair of tire-wheel assembly steering devices is provided corresponding to the right and left front tire-wheel assemblies in a vehicle having four tire-wheel assemblies including right and left front tire-wheel assemblies and right and left rear tire-wheel assemblies. The understeer control may be performed such that the steered position of the changed tire-wheel assembly becomes larger when a pair of tire-wheel assembly steering devices is provided corresponding to the right and left rear tire-wheel assemblies in a vehicle having four tire-wheel assemblies including right and left front tire-wheel assemblies and right and left rear tire-wheel assemblies. In the vehicle having four tire-wheel assemblies including right and left front tire-wheel assemblies and right and left rear tire-wheel assemblies, four tire-wheel assembly steering devices may be provided corresponding to the right and left front tire-wheel assemblies and the right and left rear tire-wheel assemblies. In that case, the understeer control may be executed such that the steered position of the changed tire-wheel assembly on the front tire-wheel assembly side becomes smaller and the steered position of the changed tire-wheel assembly on the rear tire-wheel assembly side becomes larger.

The recognition of the turning outer tire-wheel assembly in the execution of the understeer control may be understood from the description above. For example, in the first aspect, the controller may be configured to compare steering forces generated by the first tire-wheel assembly steering device and the second tire-wheel assembly steering device, and recognize, as a turning outer tire-wheel assembly, a tire-wheel assembly steered by one of the first tire-wheel assembly steering device and the second tire-wheel assembly steering device. The one of the first tire-wheel assembly steering device and the second tire-wheel assembly steering device may generate a larger steering force. The turning outer tire-wheel assembly may be recognized based on the operating direction of the steering operation member. However, when the vehicle is being autonomously driven, for example, the steering operation member may not be operated, so the recognition based on the comparison of the steering forces is effective.

In the first aspect, the turning index may be a difference between steering force generated by the first tire-wheel assembly steering device and steering force generated by the second tire-wheel assembly steering device.

In the first aspect, the controller may be able to change the set threshold value.

In the first aspect, the controller may be able to change a change amount of the steered position of one of the right tire-wheel assembly and the left tire-wheel assembly in the steered position change process.

The set threshold value for the turning index used for determining the execution of the understeer control may be set fixedly or variably. For example, when the driving mode of the vehicle is set to a mode that emphasizes the stability of turning, the set threshold value may be set to a small value in order to facilitate the execution of understeer control, and when the driving mode of the vehicle is set to a mode that emphasizes the responsiveness (quickness) of the vehicle behavior, the set threshold value may be set to a large value in order to make the understeer control difficult to be executed.

The steered position of the changed tire-wheel assembly in the understeer control may be changed by changing the target steered position, but alternatively, may be changed by limiting or increasing the steering force generated by one of the first tire-wheel assembly steering device and the second tire-wheel assembly steering device. Furthermore, when the tire-wheel assembly steering device has the electric motor as a drive source as described above, the steered position of the changed tire-wheel assembly may be changed by reducing or increasing the supply current to the electric motor.

In addition, the change amount of the steered position of the changed tire-wheel assembly in the understeer control, that is, the difference in the steered position between the case where the understeer control is not executed and the case where the understeer control is executed may be fixedly set or set to be variable depending on some parameters. By changing the change amount, it is possible to adjust the compliance in the lateral force compliance steering action described above for the purpose of achieving an appropriate feeling of response in the steering operation of the driver, and it is also possible to adjust the steered position of the changed tire-wheel assembly for the purpose of achieving an appropriate degree of turning stability of the vehicle. Specifically, a configuration may be adopted in which the change amount is set to be small when it is possible to imitate a situation where a relatively large brake operation is being performed by the driver or when it is possible to imitate a situation where a relatively large accelerator operation is performed by the driver, for example,.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a schematic view showing an overall configuration of a vehicle steering system according to a first embodiment;

FIG. 2 is a perspective view showing a tire-wheel assembly installation module including a tire-wheel assembly steering device constituting the vehicle steering system of the first embodiment;

FIG. 3 is a graph showing a comparison between a turning outer tire-wheel assembly and a turning inner tire-wheel assembly regarding a steering torque generated by a steering motor that serves as a steering force for steering a tire-wheel assembly;

FIG. 4 is a flowchart of a steering integrated control program executed in the vehicle steering system of the first embodiment;

FIG. 5 is a flowchart of a tire-wheel assembly steering program executed in the vehicle steering system of the first embodiment;

FIG. 6 is a flowchart of a steered position change process subroutine that constitutes a part of the steering integrated control program;

FIG. 7 is a schematic view showing an overall configuration of a vehicle steering system according to a second embodiment;

FIG. 8 is a flowchart of a steering integrated control program executed in the vehicle steering system of the second embodiment; and

FIG. 9 is a flowchart of a tire-wheel assembly steering program executed in the vehicle steering system of the second embodiment.

DETAILED DESCRIPTION OF EMBODIMENTS

Hereinafter, as a mode for carrying out the present invention, a vehicle steering system according to an embodiment of the present invention and a modification thereof will be described in detail with reference to the drawings. In addition to the following embodiments, the present invention may be carried out in various modes with various modifications and improvements based on the knowledge of those skilled in the art, including the modes described in the Summary of the Invention.

[A] Configuration of Vehicle Steering System

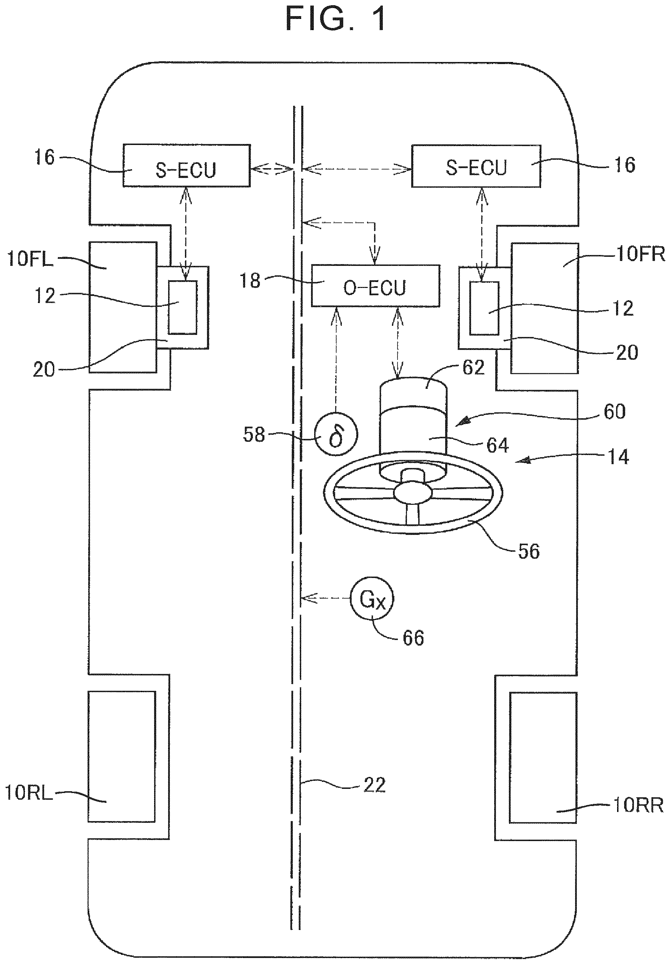

A vehicle steering system according to a first embodiment (hereinafter, may be simply referred to as "steering system") is a so-called steer-by-wire steering system. As schematically shown in FIG. 1, the vehicle steering system includes: a pair of tire-wheel assembly steering devices 12 that are mounted on a vehicle having right and left front tire-wheel assemblies 10FR and 10FL and right and left rear tire-wheel assemblies 10RR and 10RL and that respectively steer the right and left front tire-wheel assemblies 10FR and 10FL; an operation device 14 for receiving operation of a driver; a pair of steering electronic control units (hereinafter, may be abbreviated as "steering ECUs") 16 for respectively controlling the tire-wheel assembly steering devices 12; and an operation electronic control unit (hereinafter, may be abbreviated as "operation ECU") 18 for controlling the operation device 14 and supervising the steering ECUs 16. When it is not necessary to distinguish between the right and left front tire-wheel assemblies 10FR and 10FL, they may be collectively referred to as front tire-wheel assemblies 10F, and when it is not necessary to distinguish between the right and left rear tire-wheel assemblies 10RR and 10RL, they may be collectively referred to as rear tire-wheel assemblies 10R. When it is not necessary to distinguish between the front tire-wheel assemblies 10F and the rear tire-wheel assemblies 10R, they may be collectively referred to as the tire-wheel assemblies 10.

Each of the tire-wheel assembly steering devices 12 is included in a tire-wheel assembly installation module 20, which will be described in detail later. The steering ECUs 16 and the operation ECU 18 are connected to a car area network or controllable area network (CAN) 22, and can communicate with each other via the CAN 22. In the steering system, it can be considered that controllers for controlling the tire-wheel assembly steering devices 12 are constituted by the steering ECUs 16, the operation ECU 18, and the CAN 22.

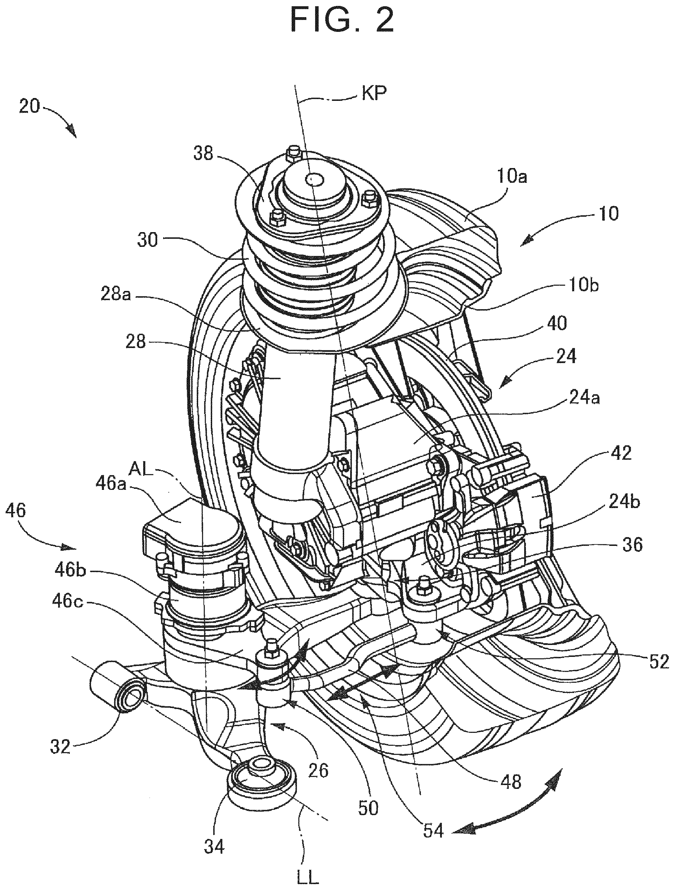

The tire-wheel assembly installation module (hereinafter, may be simply abbreviated as "module") 20 is a module for installing a wheel 10b with a tire 10a mounted thereon on the vehicle body, as shown in FIG. 2. The wheel 10b itself can be considered as a tire-wheel assembly, but in the present embodiment, the wheel 10b with the tire 10a mounted thereon is referred to as the tire-wheel assembly 10.

The module 20 has a tire-wheel assembly drive unit 24 as a tire-wheel assembly rotation drive device. The tire-wheel assembly drive unit 24 includes a housing 24a, an electric motor serving as a drive source included in the housing 24a and a speed reducer for reducing the speed of rotation transferred from the electric motor (both not shown), and an axle hub to which the tire-wheel assembly 10b is attached (hidden and invisible in FIG. 2). The tire-wheel assembly drive unit 24 is disposed inside the rim of the wheel 10b, and is a so-called in-wheel motor unit. Since the tire-wheel assembly drive unit 24 has a well-known structure, the description of the structure will be omitted.

The module 20 includes a MacPherson-type suspension device (also referred to as "MacPherson strut-type suspension device"). In this suspension device, the housing 24a of the tire-wheel assembly drive unit 24 functions as a carrier that holds the tire-wheel assembly such that the tire-wheel assembly is rotatable, and further, the housing 24a functions as a steering knuckle in the tire-wheel assembly steering device 12 described later, and is allowed to move up and down with respect to the vehicle body. Thus, the suspension device includes a lower arm 26 that is a suspension arm, the housing 24a of the tire-wheel assembly drive unit 24, a shock absorber 28, and a suspension spring 30.

Since the suspension device itself has a general structure, a brief description thereof will be made. The lower arm 26 has the shape of a so-called L-arm, and a base end portion thereof is divided into two parts in the front-rear direction of the vehicle. At the base end portion, the lower arm 26 is supported by a side member (not shown) of the vehicle body via a first bush 32 and a second bush 34 so as to be rotatable around an arm rotation axis LL. The housing 24a of the tire-wheel assembly drive unit 24 is rotatably connected, at a lower part thereof, to a distal end portion of the lower arm 26 via an arm connecting ball joint 36 that is a first joint (hereinafter, may be referred to as "first joint 36").

The lower end portion of the shock absorber 28 is fixedly supported by the housing 24a of the tire-wheel assembly drive unit 24, and the upper end portion of the shock absorber 28 is supported by the upper part of the tire housing of the vehicle body via an upper support 38. The upper end portion of the suspension spring 30 is also supported by the upper part of the tire housing of the vehicle body via the upper support 38, and the lower end portion of the suspension spring 30 is supported by a lower support 28a provided in a flange shape on the shock absorber 28. That is, the suspension spring 30 and the shock absorber 28 are arranged in parallel with each other between the lower arm 26 and the vehicle body.

The module 20 has a brake device, and the brake device includes a disc rotor 40 and a brake caliper 42. The disc rotor 40 is attached to the axle hub together with the wheel 10b and rotates together with the tire-wheel assembly 10. The brake caliper 42 is held by the housing 24a of the tire-wheel assembly drive unit 24 so as to extend over the disc rotor 40. Although detailed description is omitted, the brake caliper 42 has a brake pad serving as a friction member and a brake actuator that has an electric motor and presses the brake pad against the disc rotor 40 with the force of the electric motor to stop the rotation of the tire-wheel assembly 10. The brake device is a so-called electric brake device that generates a braking force depending on the force generated by the electric motor.

Further, the module 20 has the above-mentioned tire-wheel assembly steering device 12 that constitutes the steering system of the present embodiment. The tire-wheel assembly steering device 12 is a single-wheel independent steering device for steering only one of the right and left tire-wheel assemblies 10 independently of the other. The tire-wheel assembly steering device 12 generally includes the housing 24a of the tire-wheel assembly drive unit 24 that functions as a steering knuckle as described above (hereinafter, may be referred to as "steering knuckle 24a" when treated as a component of the tire-wheel assembly steering device 12), a steering actuator 46 disposed on the lower arm 26 at a position close to the base end portion of the lower arm 26, and a tie rod 48 that connects the steering actuator 46 and the steering knuckle 24a.

The steering actuator 46 is rotated by the rotation of a steering motor 46a that is an electric motor serving as a drive source, a speed reducer 46b that reduces the speed of rotation transferred from the steering motor 46a, and an actuator arm 46c that is rotated by the rotation of the steering motor 46a via the speed reducer 46b and that functions as a pitman arm. The base end portion of the tie rod 48 is connected to the actuator arm 46c via a rod base end connection ball joint 50 that is a second joint (hereinafter, may be referred to as "second joint 50"). The distal end portion of the tie rod 48 is connected to the knuckle arm 24b of the steering knuckle 24a via a rod distal end portion ball joint 52 that is a third joint (hereinafter, may be referred to as "third joint 52").

In the tire-wheel assembly steering device 12, a line connecting the center of the upper support 38 and the center of the first joint 36 is a kingpin axis KP. By activating the steering motor 46a, the actuator arm 46c of the steering actuator 46 rotates around an actuator axis AL, as shown by the thick arrow in FIG. 2. The rotation is transferred by the tie rod 48, and the steering knuckle 24a is rotated around the kingpin axis KP. That is, as shown by the thick arrow in FIG. 2, the tire-wheel assembly 10 is steered. With such a structure, the tire-wheel assembly steering device 12 has a motion conversion mechanism 54 that includes the actuator arm 46c, the tie rod 48, the knuckle arm 24b, and the like, and that converts the rotational motion of the steering motor 46a into the steering motion of the tire-wheel assemblies 10.

In the tire-wheel assembly steering device 12, the steering actuator 46 is disposed on the lower arm 26. Therefore, the module 20 can be easily assembled to the vehicle body. In brief, the module 20 including the suspension device, the brake device, and the tire-wheel assembly steering device can be mounted on the vehicle by simply attaching the base end portion of the lower arm 26 to the side member of the vehicle body and attaching the upper support 38 to the upper part of the tire housing of the vehicle body. That is, the module 20 is a module having excellent mountability with respect to a vehicle.

The operation device 14 has a general structure in a steer-by-wire steering system. Briefly, as shown in FIG. 1, the operation device 14 includes a steering wheel 56 serving as a steering operation member operated by the driver, a steering sensor 58 for detecting an operation angle that is the rotation angle of the steering wheel 56 as an operation position of the steering operation member, and a reaction force applying device 60 that applies an operation reaction force to the steering wheel 56. The reaction force applying device 60 includes a reaction motor 62 that is an electric motor serving as a power source, and a speed reducer 64 for transferring the force of the reaction motor 62 to the steering wheel 56.

[B] Control of Vehicle Steering System

i) Basic Steering Control

In brief, the basic steering control in the steering system is a control for steering each of the two front tire-wheel assemblies 10F to a steered position $\psi$ in response to a steering request. The steered position $\psi$ is synonymous with a so-called steered angle, and can be considered as a phase displacement amount from a reference steered position, that is, a steered amount. In this case, a straight traveling state position where the front tire-wheel assembly 10F should be positioned when the vehicle is traveling straight is defined as the reference steered position.

The basic steering control will be described in detail. The operation ECU 18, which is an electronic control unit serving as integrated control means, acquires the operation angle of the steering wheel 56 based on the detection of the steering sensor 58, that is, a steering operation position $\delta$ (hereinafter, may be simply referred to as "operation position $\delta$") as a degree of steering operation. Based on the operation position $\delta$, the operation ECU 18 determines a target steered position $\psi^*$ that is a steered position $\psi$ to be realized in each tire-wheel assembly 10 according to a set steering gear ratio. The operation position $\delta$ can be considered as a position change amount from a reference operation position, that is, a steering operation amount, with a straight traveling state position for causing the vehicle to travel straight defined as the reference operation position. When the vehicle is being autonomously driven, the target steered position $\psi^*$ included in an instruction sent from an autonomous driving system (nor shown) via the CAN 22 is adopted instead of the target steered position $\psi^*$ determined based on the operation position $\delta$. Strictly speaking, the steering operation position $\delta$ and the steered position $\psi$ each have opposite values on the right and left sides of the reference operation position and the reference steered position.

The tire-wheel assembly steering device 12 does not have a steered position sensor for directly detecting the steered position $\psi$ of the tire-wheel assembly 10. Therefore, in this steering system, the operation ECU 18 and each of the steering ECUs 16 control, based on the operating position of the steering motor 46a, the steering force generated by the steering actuator 46, using the fact that there is a specific relationship between the steered position $\psi$ of the tire-wheel assembly 10 and the operating position of the steering motor 46a. The steering force generated by the steering actuator 46 is equivalent to a steering torque Tq that is the torque generated by the steering motor 46a. Therefore, specifically, the operation ECU 18 determines the target steering torque Tq* that is the steering torque Tq that should be generated by the steering motor 46a, based on the operating position of the steering motor 46a.

The operating position of the steering motor 46a is an angular position of a motor shaft, that is, a motor rotation angle θ because the steering motor 46a is a rotary motor. The operating position of the motor can be considered as an operating amount of the motor, specifically, the amount of change from a reference operating position that is the operating position of the motor when the vehicle is traveling straight. The motor rotation angle θ can be considered as a displacement angle from a reference motor rotation angle that is the reference operating position of the motor when the vehicle is traveling straight. The motor rotation angle θ is accumulated exceeding 360°. Furthermore, in the tire-wheel assembly steering device 12, the steering motor 46a and the steering knuckle 24a are mechanically connected, and there is a specific relationship between the amount of change in the motor rotation angle θ of the steering motor 46a and the amount of change in the steered position ψ of the tire-wheel assembly. Roughly speaking, it can be considered that a relationship based on a certain ratio, which is based on the reduction ratio of the speed reducer 46b and the like, is established between the amount of change in the motor rotation angle θ and the amount of change in the steered position ψ. Using this relationship, the steered position ψ of the tire-wheel assemblies 10 is controlled by controlling the motor rotation angle θ, rather than directly controlling the steered position ψ. Strictly speaking, the motor rotation angle θ also has opposite values on the right and left sides of the reference motor rotation angle.

Specifically, the determination of the target steering torque Tq* will be specifically described. For each tire-wheel assembly 10, the operation ECU 18 determines a target motor rotation angle θ* serving as a target operating position that is a target of the motor rotation angle θ, based on the target steered position ψ*. On the other hand, the steering motor 46a is a brushless direct-current (DC) motor and has a motor rotation angle sensor (for example, a Hall integrated circuit (IC), a resolver, etc.) for phase switching in current supply to the steering motor 46a. Based on the detection of the motor rotation angle sensor, each steering ECU 16 grasps an actual motor rotation angle θ that is the current motor rotation angle θ based on the reference motor rotation angle, and transmits information on the actual motor rotation angle θ to the operation ECU 18 via the CAN 22. The operation ECU 18 obtains a motor rotation angle deviation Δθ that is a deviation of the motor rotation angle θ with respect to the target motor rotation angle θ* as the operating position deviation for each tire-wheel assembly 10, and based on this motor rotation angle deviation Δθ (= θ* - θ), determines the target steering torque Tq* according to the following equation.

$$Tq^* = G_p \cdot \Delta\theta + G_D \cdot (d\Delta\theta/dt) + G_I \cdot \int\Delta\theta dt$$

The above equation is an equation according to the feedback control law based on the motor rotation angle deviation Δθ, and the first term, the second term, and the third term are the proportional term, the differential term, the integral term, respectively, and $G_P$, $G_D$, and $G_I$ represent proportional gain, differential gain, and integral gain, respectively.

The operation ECU 18 transmits information on the target steering torque Tq* to the steering ECU 16 of each tire-wheel assembly 10 via the CAN 22, and each steering ECU 16 controls the steering motor 46a based on the target steering torque Tq*. The steering torque Tq and the supply current I to the steering motor 46a have a specific relationship. Specifically, since the steering torque Tq depends on the force exerted by the steering motor 46a, the steering torque Tq and the supply current I are generally in a proportional relationship. Based on this, each steering ECU 16 determines a target supply current I* that is a target of the supply current I to the steering motor 46a based on the target steering torque Tq* determined in the operation ECU 18, and supplies the supply current I* to the steering motor 46a. Specifically, each steering ECU 16 has a computer that executes processes such as determination of the target supply current I* and an inverter serving as a drive circuit connected to the computer, and based on the target supply current I* determined by the computer, the current I is supplied from the inverter to the steering motor 46a. According to the basic steering control described above, the steering force generated by each of the tire-wheel assembly steering devices 12, that is, the steering torque Tq, is controlled so that the steered position ψ of each of the right and left tire-wheel assemblies 10 is controlled to match the target steered position ψ*.

ii) Change in Steered Position to Realize Understeer Tendency

When the vehicle is turning and the turning is severe, it is desirable that the turning characteristics of the vehicle have an understeer tendency from the viewpoint of turning stability of the vehicle. The wording "turning is severe" means that a centrifugal force acting on the vehicle body during turning is large. In view of this, in the steering system, when a turning index indicating the severity of turning exceeds a set threshold value, the turning characteristics of the vehicle are made to have a stronger understeer tendency compared with the case where the turning index does not exceed the set threshold value. For this, the steered position ψ of one of the right and left tire-wheel assemblies, more specifically, the outer tire-wheel assembly 10 in turning (hereinafter, may be referred to as "turning outer tire-wheel assembly" and the inner tire-wheel assembly may be referred to as "turning inner tire-wheel assembly") is changed. The understeer tendency refers to characteristics of the undercarriage mechanism of a vehicle, in which when a vehicle with a normal level of straight-line stability increases its drive force (speed) with a constant steering angle in a steady circular turn, the ground friction forces of the front tire-wheel assemblies are defeated by centrifugal force and the vehicle faces outward of the circle. Alternatively, the understeer tendency refers to a state in which it is necessary to turn the steering wheel to continue a constant turn.

The steering system adopts, as the turning index, a difference between the steering forces actually exerted by the steering motors 46a of the right and left tire-wheel assembly steering devices 12, that is, a torque difference $\Delta Tq$ (= $|Tq_L - Tq_R|$) that is a difference between the steering torques $Tq_L$ and $Tq_R$ of the steering motors 46a of the right and left tire-wheel assembly steering devices 12. When the torque difference $\Delta Tq$ exceeds a threshold torque difference $\Delta Tq_0$ that is a set threshold value, the steered position $\psi$ of the turning outer tire-wheel assembly is changed.

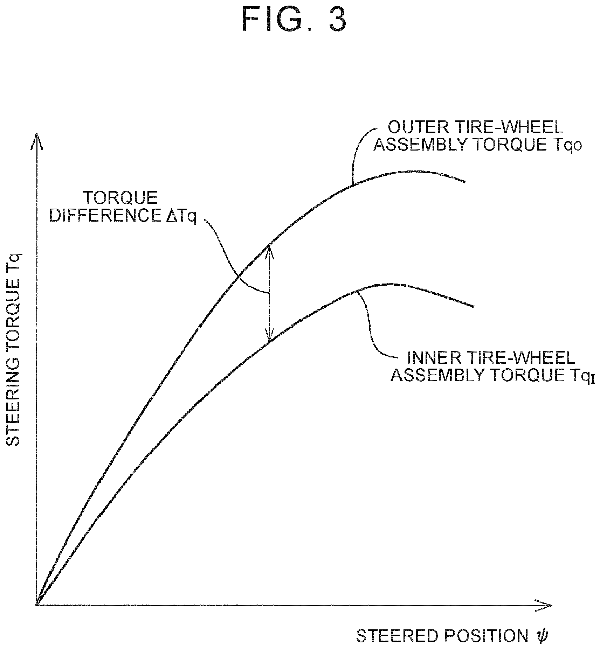

The steering torque Tq, specifically, the steering torque Tq for steering the tire-wheel assembly 10 to a certain steered position $\psi$, or the steering torque Tq for maintaining the tire-wheel assembly 10 at a certain steered position $\psi$ needs to defeat a self-aligning torque. Therefore, the steering torque Tq increases as the vehicle traveling speed (hereinafter, may be referred to as "vehicle speed") increases and the steered position $\psi$ of the tire-wheel assembly 10 increases (becomes farther away from the straight traveling position). Meanwhile, the steering torque Tq increases as a load Ws of the vehicle body shared by the tire-wheel assembly 10 (hereinafter, may be referred to as "shared load Ws") increases. Assuming that the steering torque Tq of the turning outer tire-wheel assembly is an outer tire-wheel assembly torque $Tq_O$ and the steering torque Tq of the turning inner tire-wheel assembly is an inner tire-wheel assembly torque $Tq_I$, the outer tire-wheel assembly torque Tqo and the inner tire-wheel assembly torque $Tq_I$ change with the steered position $\psi$ as shown in FIG. 3 at a constant speed. The difference $\Delta Tq$ between the steering torques $Tq_R$ and $Tq_L$ for the right and left tire-wheel assemblies 10, that is, the torque difference $\Delta Tq$ that is the difference between the outer tire-wheel assembly torque Tqo and the inner tire-wheel assembly torque $Tq_L$ increases as a shared load difference $\Delta W_S$ that is the difference between the shared loads $W_{SR}$ and $W_{SL}$ of the right and left tire-wheel assemblies increases. As the severity of turning increases, the shared load difference $\Delta W_S$ increases, so the torque difference $\Delta Tq$ can be the above turning index. It is possible to use the lateral acceleration generated in the vehicle body, the yaw rate of the vehicle, etc. as the turning index, but using the torque difference $\Delta Tq$ as the turning index, it is possible to obtain the advantage that no separate sensor is required.

Each steering ECU 16 detects the current I actually supplied to the steering motor 46a (hereinafter, may be referred to as "actual supply current I") based on the information from the inverter. Based on the actual supply current I, the steering ECU 16 estimates the steering torque Tq actually exerted (hereinafter, may be referred to as "actual steering torque Tq") in accordance with the relationship described above, and transmits information on the actual steering torque Tq to the operation ECU 18. The operation ECU 18 specifies the torque difference $\Delta Tq$ based on the received actual steering torques $Tq_R$ and $Tq_L$ for the right and left tire-wheel assemblies 10. When the torque difference $\Delta Tq$ exceeds the threshold torque difference $\Delta Tq_0$, the operation ECU 18 recognizes that turning is severe and executes a steered position change process for reducing the steered position $\psi$ of the turning outer tire-wheel assembly.

In the steering system, the threshold torque difference $\Delta Tq_0$ for determining the execution of the steered position change process is set to a value that is different depending on the traveling characteristics to be realized in the vehicle. That is, the threshold torque difference $\Delta Tq_0$ can be changed. In the vehicle, two driving modes including a comfort mode and a sports mode are prepared as the driving mode of the vehicle, and one of these two driving modes is selected by the operation of the driver. The comfort mode is a driving mode that emphasizes riding comfort and running stability of the vehicle, and the sports mode is a driving mode that emphasizes brisk running and driving response of the vehicle. The operation ECU 18 sets the threshold torque difference $\Delta Tq_0$ to a comfort mode value $\Delta Tq_C$ that is a relatively small value in order to expand the execution range of the steered position change process, when the comfort mode is selected. The operation ECU 18 sets the threshold torque difference $\Delta Tq_0$ to a sports mode value $\Delta Tq_S$ that is a relatively large value in order to narrow the execution range of the steered position change process, when the sports mode is selected.

When executing the steered position change process, the operation ECU 18 determines which of the left front tire-wheel assembly 10FL and the right front tire-wheel assembly 10FR is the turning outer tire-wheel assembly. In this determination, the operation ECU 18 compares the steering forces generated by the right and left tire-wheel assembly steering devices 12, that is, the actual steering torque $Tq_L$ for the left front tire-wheel assembly 10FL and the actual steering torque $Tq_R$ for the right front tire-wheel assembly 10FR, and recognizes the front tire-wheel assembly 10F having a larger actual steering torque (strictly speaking, the one with a larger absolute value) as the turning outer tire-wheel assembly. The recognition of the turning outer tire-wheel assembly can be performed based on the direction of operation of the steering wheel 56. However, the recognition of the turning outer tire-wheel assembly by comparing the actual steering torques Tq is especially effective when the vehicle is being autonomously driven and the steering wheel 56 is not operated by the driver, for example.

In the steered position change process, the target steering torque Tq* for the recognized turning outer tire-wheel assembly is changed by a steering torque change amount dTq. Specifically, when the left front tire-wheel assembly 10FL is recognized as the turning outer tire-wheel assembly, the target steering torque $Tq_L$* for the left front tire-wheel assembly 10FL is reduced by the steering torque change amount dTq. When the right front tire-wheel assembly 10FR is recognized as the turning outer tire-wheel assembly, the target steering torque $Tq_R$* for the right front tire-wheel assembly 10FR is reduced by the steering torque change amount dTq.

However, in the steering system, the steering torque change amount dTq is changed in accordance with the operation state of the vehicle. More specifically, the steering torque change amount dTq is usually a normal value $dTq_N$, but when a relatively large braking operation is performed on the vehicle and when a relatively large accelerator operation is performed on the vehicle, the steering torque change amount dTq is changed to be small. Specifically, based on a front-rear acceleration Gx (which takes a positive value in acceleration and a negative value in deceleration) detected by a front-rear acceleration sensor 66 (see FIG. 1) mounted on the vehicle, the operation ECU 18 changes the steering torque change amount dTq to a deceleration value $dTq_B$ (< $dTq_N$) when the front-rear acceleration Gx is smaller than a deceleration-side threshold value $Gx_B$, and changes the steering torque change amount dTq to an acceleration value $dTq_A$ (< $dTq_N$), when the front-rear acceleration Gx is larger than the acceleration-side threshold value $Gx_A$. The deceleration value $dTq_B$ is set to be smaller than the acceleration value $dTq_A$. Changing the steering torque change amount dTq as described above allows the steering system to adjust the compliance in the lateral force compliance steering action for the purpose of achieving an appropriate feeling of response in the steering operation of the driver, and also allows the steering system to adjust the steered position $\psi$ of the turning outer tire-wheel assembly for the purpose of achieving an appropriate degree of turning stability of the vehicle.

iii) Control Flow Operation

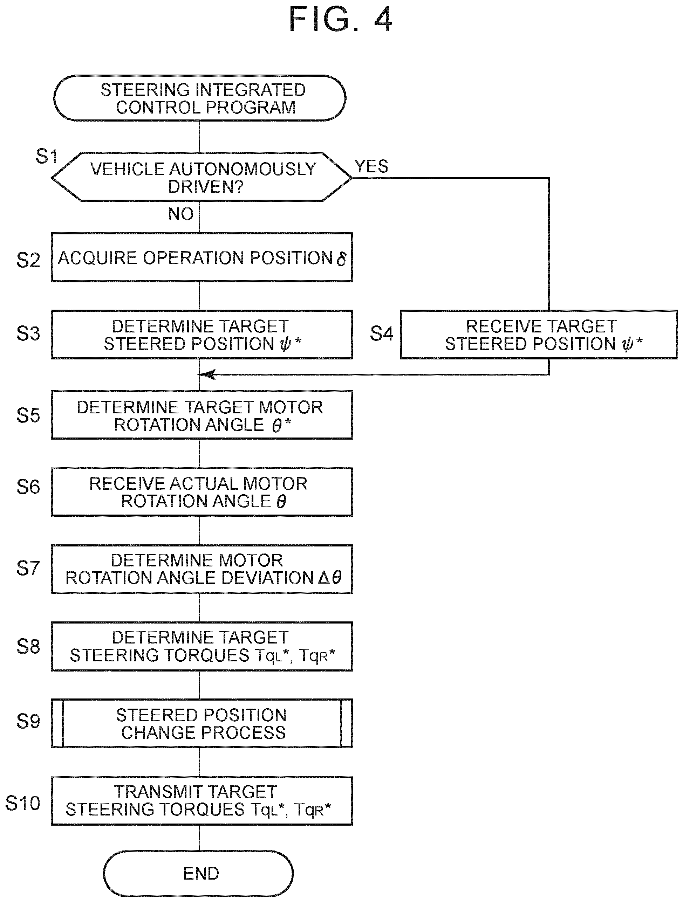

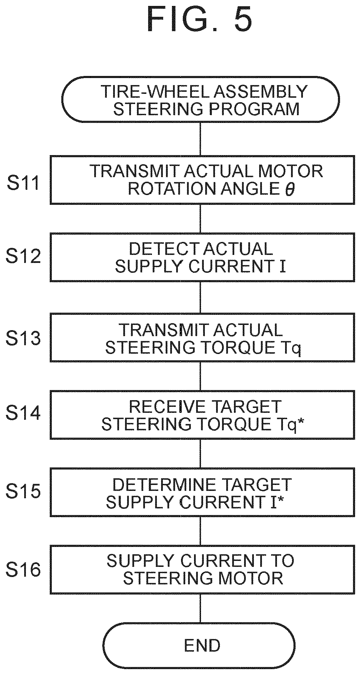

Each of the ECU 18 and the steering ECUs 16 has a computer. The computer of the operation ECU 18 executes a steering integrated control program illustrated by a flowchart in FIG. 4 and the computer of each steering ECU 16 executes a tire-wheel assembly steering program illustrated by a flowchart in FIG. 5 each at a short cycle (for example, several milliseconds to several tens of milliseconds), so that the basic steering control and the steering control including a steered position change process described above are performed. To describe the steering control of the steering system, the flow of process according to those programs will be briefly described below.

In the process according to the steering integrated control program executed in the operation ECU 18, first, in step 1 (hereinafter, may be referred to as "S1". The same applies to the other steps), it is determined whether the vehicle is being autonomously driven. When the vehicle is not autonomously driven, the operation position $\delta$ of the steering wheel 56 is acquired in S2 based on the detection of the steering sensor 58, and the target steered position $\psi$* is determined in S3. When it is determined in S1 that the vehicle is being autonomously driven, information on the target steered position $\psi$* from the autonomous driving system is received in S4.

Subsequently, in S5, the target motor rotation angles $\theta$* of the right and left tire-wheel assemblies 10 are determined, and in S6, information on the actual motor rotation angles $\theta$ of the steering motors 46a of the right and left tire-wheel assembly steering devices 12 is received from the steering ECUs 16. In S7, motor rotation angle deviations $\Delta\theta$ for the tire-wheel assembly steering devices 12 are determined based on the target motor rotation angles $\theta$* determined for the steering motors 46a of the tire-wheel assembly steering devices 12 and the received actual motor rotation angles $\theta$. Then, in S8, the target steering torques $Tq_L$* and $Tq_R$*, which are the steering torques Tq to be generated by the steering motors 46a of the tire-wheel assembly steering devices 12, are determined according to the above equation.

In the next S9, a steered position change process subroutine that will be described in detail later is executed, and in S10, information on the target steering torques $Tq_L$* and $Tq_R$* determined in S8 or the target steering torques $Tq_L$* and $Tq_R$* changed in S9 is transmitted to the steering ECUs 16.

In the process according to the tire-wheel assembly steering program executed in each steering ECU 16, first, in S11, the information on the actual motor rotation angle $\theta$ acquired via the inverter is transmitted to the operation ECU 18. In the subsequent S12, the actual supply current I, which is the current actually supplied to the steering motor 46a via the inverter, is detected, and in S13, the actual steering torque Tq estimated based on the actual supply current I is transmitted to the operation ECU 18.

In the next S14, information on the target steering torque Tq* is acquired from the operation ECU 18, and in S15, the target supply current I*, which is the current to be supplied to the steering motor 46a, is determined based on the target steering torque Tq*. Then, in S16, the current I based on the target supply current I* is supplied to the steering motor 46a.

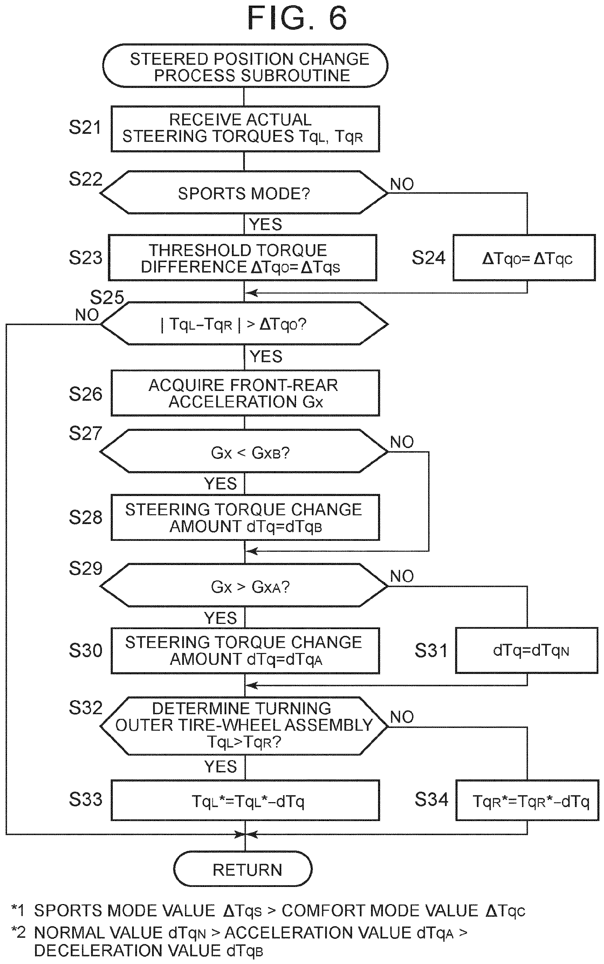

In S9 of the steering integrated control program described above, the steered position change process subroutine illustrated by a flowchart shown in FIG. 6 is executed. In the process according to the subroutine, first, in S21, information on the actual steering torques $Tq_L$ and $Tq_R$ is received from each steering ECU 16. In the next S22, it is determined whether the driving mode of the vehicle is the comfort mode or the sports mode. When the driving mode is the sports mode, the threshold torque difference $\Delta Tq_0$ is set to a sports mode value $\Delta Tq_S$ in S23, and when the driving mode is the comfort mode, the threshold torque difference $\Delta Tq_0$ is set to a comfort mode value $\Delta Tq_C$ in S24. Then, in S25, with the torque difference $\Delta Tq$ based on the actual steering torques $Tq_L$ and $Tq_R$ used as the turning index, it is determined wheth-

er the torque difference $\Delta Tq$ exceeds the threshold torque difference $\Delta Tq_0$. The steered position change process in S26 and thereafter is executed when the torque difference $\Delta Tq$ exceeds the threshold torque difference $\Delta Tq_0$, and the steered position change process in S26 and thereafter is not executed when the torque difference $\Delta Tq$ does not exceed the threshold torque difference $\Delta Tq_0$.

When the steered position change process is executed, first, in S26, the front-rear acceleration Gx generated in the vehicle is acquired based on the detection of the front-rear acceleration sensor 66. In S27, it is determined whether the front-rear acceleration Gx is smaller than the deceleration side threshold value $Gx_B$ (the front-rear acceleration Gx takes a negative value and is larger than the deceleration side threshold value $Gx_B$ in absolute value).When it is determined that the front-rear acceleration Gx is smaller than the deceleration side threshold value $Gx_B$, the steering torque change amount dTq is set to the deceleration value $dTq_B$ in S28. When it is determined that the front-rear acceleration Gx is equal to or smaller than the deceleration side threshold value $Gx_B$, S28 is skipped. Then, in S29, it is determined whether the front-rear acceleration Gx is larger than the acceleration side threshold value $Gx_A$, and when the front-rear acceleration Gx is determined to be larger than the acceleration side threshold value $Gx_A$, the steering torque change amount dTq is set to the acceleration value $dTq_A$ in S30. When it is determined that the front-rear acceleration Gx is equal to or smaller than the acceleration side threshold value $Gx_A$, the steering torque change amount dTq is set to the normal value $dTq_N$ in S31.

In the following S32, the determination of the turning outer tire-wheel assembly is made based on the actual steering torques $Tq_L$ and $Tq_R$. Specifically, when the actual steering torque $Tq_L$ of the left front tire-wheel assembly 10FL is larger than the actual steering torque $Tq_R$ of the right front tire-wheel assembly 10FR, the left front tire-wheel assembly 10FL is recognized as the turning outer tire-wheel assembly, and when the actual steering torque $Tq_R$ of the right front tire-wheel assembly 10FR is larger than the actual steering torque $Tq_L$ of the left front tire-wheel assembly 10FL, the right front tire-wheel assembly 10FR is recognized as the turning outer tire-wheel assembly. When the left front tire-wheel assembly 10FL is recognized as the turning outer tire-wheel assembly, the steering torque change amount dTq is subtracted from the target steering torque $Tq_L{}^*$ for the left front tire-wheel assembly 10FL in S33, and when the right front tire-wheel assembly 10FR is recognized as the turning outer tire-wheel assembly, the steering torque change amount dTq is subtracted from the target steering torque $Tq_R{}^*$ for the right front tire-wheel assembly 10FR in S34.

[A] Configuration of Vehicle Steering System

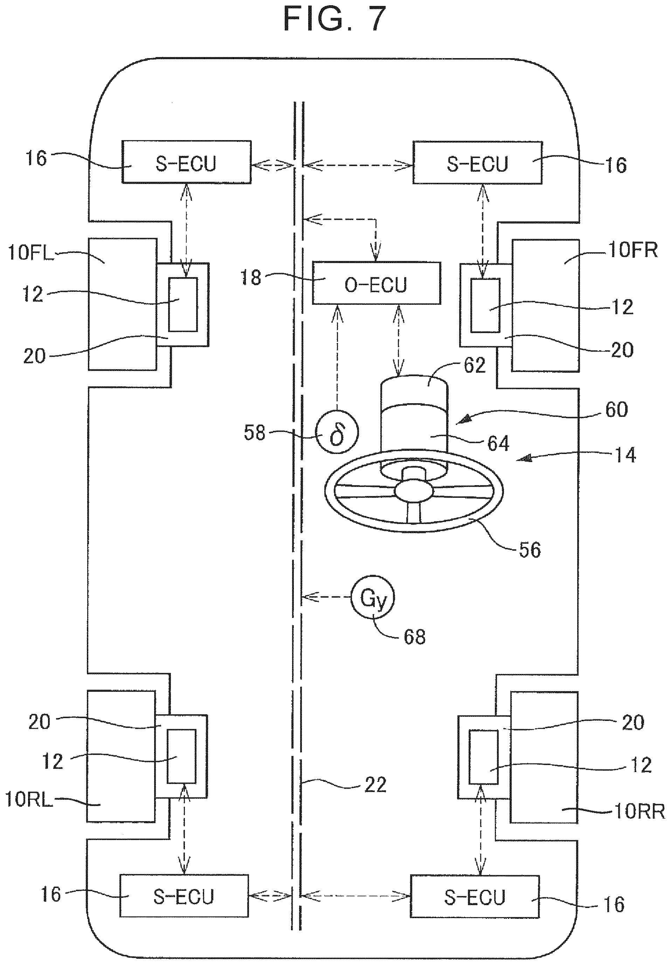

The steering system of the second embodiment is a steer-by-wire steering system, similar to the steering system of the first embodiment. However, unlike the steering system of the first embodiment, as schematically shown in FIG. 7, the steering system of the second embodiment includes a pair of tire-wheel assembly steering devices 12 on the front tire-wheel assembly side and a pair of tire-wheel assembly steering devices 12 on the rear tire-wheel assembly side, in order to individually steer the right and left front tire-wheel assemblies 10FR and 10FL and the right and left rear tire-wheel assemblies 10RR and 10RL. The steering system of the second embodiment includes two pairs of steering ECUs 16 corresponding to the two pairs of tire-wheel assembly steering devices 12. Each of the steering ECUs 16 is connected to the CAN 22, and the operation ECU 18 supervises the steering ECUs 16.

Each tire-wheel assembly steering device 12 is included in the tire-wheel assembly installation module 20 as in the steering system of the first embodiment. This module 20 has the same configuration as the module 20 of the steering system of the first embodiment, and the description of the configuration of the module 20 and the configuration of the tire-wheel assembly steering device 12 will be omitted. Further, the operation device 14 also has the same configuration as the operation device 14 of the steering system of the first embodiment, and the description of the configuration of the operation device 14 will be omitted.

Unlike the vehicle including the steering system of the first embodiment, the vehicle including the steering system of the present embodiment is not provided with the front-rear acceleration sensor 66, and is provided with a lateral acceleration sensor 68 for detecting a lateral acceleration that is an acceleration acting on the vehicle body in the vehicle width direction. In the present steering system, it can be considered that controllers for controlling the two pairs of tire-wheel assembly steering devices 12 are constituted by the two pairs of steering ECUs 16, the operation ECU 18, and the CAN 22.

[B] Control of Vehicle Steering System

i) Basic Steering Control

The basic steering control of the present steering system is a control for steering the two front tire-wheel assemblies 10F and the two rear tire-wheel assemblies 10R based on a steering request, specifically, the operation position $\delta$ of the steering wheel 56. Since the steering of the front tire-wheel assemblies 10F is the same as the steering through the basic steering control in the steering system of the first embodiment, the description thereof will be omitted.

The steering of the rear tire-wheel assemblies 10R will be described. The operation ECU 18 determines, in addition to the target steered positions $\psi_F{}^*$ of the front tire-wheel assemblies 10F, target steered positions $\psi_R{}^*$ of the rear tire-wheel assemblies 10R based on the operation position $\delta$ and the vehicle traveling speed (hereinafter, may be simply referred to as "vehicle speed") v. In brief, the operation ECU 18 determines the target steered positions $\psi_R{}^*$ such that the rear tire-wheel assemblies 10R are steered in the same direction (in the same phase) as the front tire-wheel assemblies 10F when the vehicle speed v is high, and the rear tire-wheel assemblies 10R are steered in the opposite direction (in the opposite phase) to the direction in which the front tire-wheel assemblies 10F are steered when the vehicle speed v is low. Since the method of determining the target steered positions $\psi_R{}^*$ is well known, detailed description thereof will be omitted.

Each steering ECU 16 grasps the motor rotation angle $\theta$ of the steering motor 46a of the tire-wheel assembly steering device 12, and specifies the tire-wheel assembly rotation speed (hereinafter, may be referred to as "tire-wheel assembly speed") vw that is the rotation speed of the tire-wheel assembly 10 based on a change in the motor rotation angle $\theta$. Each steering ECU 16 transmits information on the specified tire-wheel assembly speed vw to the operation ECU 18. The operation ECU 18 specifies the vehicle speed v of the vehicle by a known method based on the received information on each tire-wheel assembly speed vw, and uses the specified vehicle speed v to determine the target steered positions $\psi_R{}^*$ of the rear tire-wheel assemblies 10R.

The determination of the target steering torques $Tq_{FR}{}^*$, $Tq_{FL}{}^*$, $Tq_{RR}{}^*$, and $Tq_{RL}{}^*$ of the right and left front tire-wheel assemblies 10 and the right and left rear tire-wheel assemblies 10 based on the target steered positions $\psi_F{}^*$ and $\psi_R{}^*$, which is performed by the operation ECU 18, and the determination of the target supply current I* based on the target steering torque Tq*, which is performed by each steering ECU 16, and the like are carried out using the same technique as in the steering system of the first embodiment. Therefore, detailed description thereof will be omitted here.

ii) Change in Steered Position to Realize Understeer Tendency

In the present steering system, as in the steering system of the first embodiment, when the turning of the vehicle is severe, the operation ECU 18 executes a steered position change process in order to cause the turning characteristics of the vehicle to have an understeer tendency.

The present steering system adopts a lateral acceleration Gy as the turning index for determining whether to execute the steered position change process, instead of the torque difference $\Delta Tq$ adopted in the steering system of the first embodiment. The operation ECU 18 executes the steered position change process when the lateral acceleration Gy detected by the lateral acceleration sensor 68 (strictly speaking, the absolute value of the lateral acceleration Gy, because the signs are different between the right and left) is larger than a threshold acceleration Gyo. In the present steering system, the threshold acceleration Gyo is not changed based on the selection of the driving mode. As the turning index, for example, a yaw rate of the vehicle may be adopted instead of the lateral acceleration Gy.

In the present steering system, in the steered position change process, the operation ECU 18 reduces the target steering torque Tq* of the turning outer tire-wheel assembly 10F on the front tire-wheel assembly side by a front tire-wheel assembly side torque change amount $dTq_F$ set for the front tire-wheel assemblies 10F, and increases the target steering torque Tq* of the turning outer tire-wheel assembly 10R on the rear tire-wheel assembly side by a rear tire-wheel assembly side torque change amount $dTq_R$ set for the rear tire-wheel assemblies 10R. Specifically, when the left front tire-wheel assembly 10FL is the turning outer tire-wheel assembly, the target steering torque $Tq_{FL}{}^*$ of the left front tire-wheel assembly 10FL is reduced by the front tire-wheel assembly side torque change amount $dTq_F$, and when the right front tire-wheel assembly 10FR is the turning outer tire-wheel assembly, the target steering torque $Tq_{FR}{}^*$ of the right front tire-wheel assembly 10FR is reduced by the front tire-wheel assembly side torque change amount $dTq_F$. When the left rear tire-wheel assembly 10RL is the turning outer tire-wheel assembly, the target steering torque $Tq_{RL}{}^*$ of the left rear tire-wheel assembly 10RL is increased by the rear tire-wheel assembly side torque change amount $dTq_R$, and when the right rear tire-wheel assembly 10RR is the turning outer tire-wheel assembly, the target steering torque $Tq_{RR}{}^*$ of the right rear tire-wheel assembly 10RR is increased by the rear tire-wheel assembly side torque change amount $dTq_R$. As a result, the steered position $\psi$ of the turning outer tire-wheel assembly 10F on the front tire-wheel assembly side is made smaller, and the steered position $\psi$ of the turning outer tire-wheel assembly 10R on the rear tire-wheel assembly side is made larger, so that the turning characteristics of the vehicle have a stronger understeer tendency.

In the present steering system, the operation ECU 18 specifies the turning direction of the vehicle based on the operation position $\delta$ of the steering wheel 56, and determines which of the right and left tire-wheel assemblies 10 is to be the turning outer tire-wheel assembly based on the specified turning direction, rather than the steering torque Tq of each of the right and left tire-wheel assemblies 10. In the present steering system, change of the steering torque change amount dTq based on the acceleration/deceleration of the vehicle, which is performed in the steering system of the first embodiment, is not performed.

iii) Control Flow

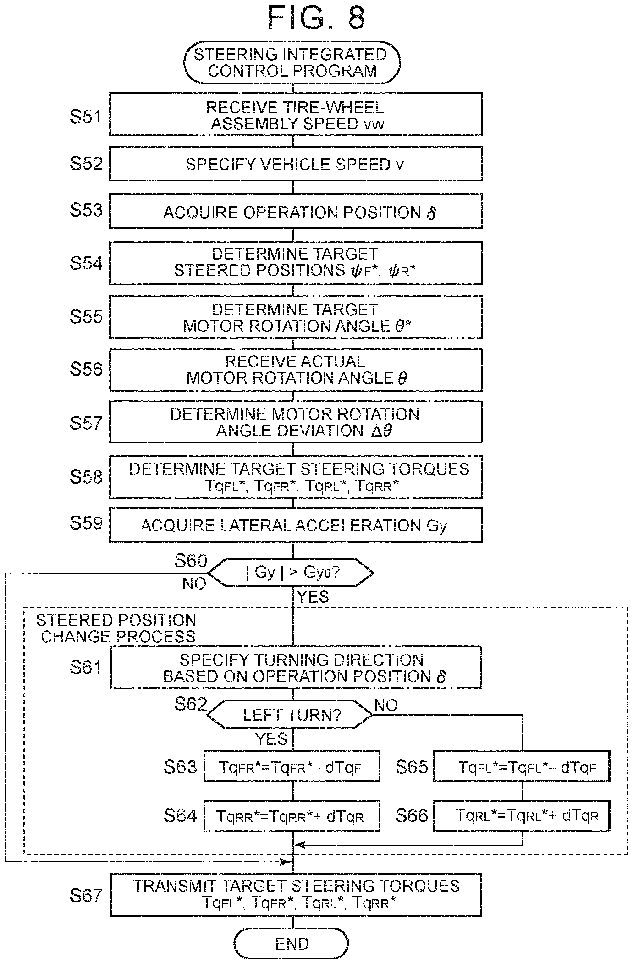

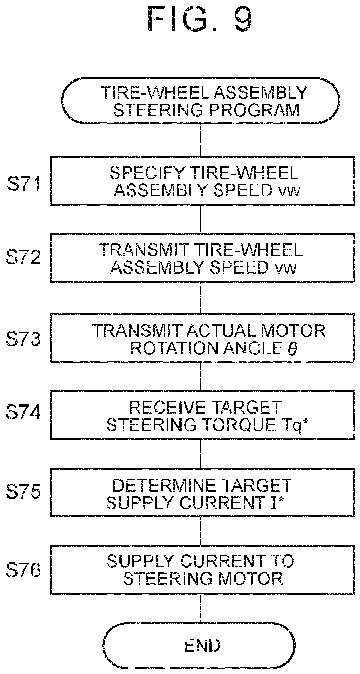

The computer of the operation ECU 18 executes a steering integrated control program illustrated by a flowchart in FIG. 8 and the computer of each steering ECU 16 executes a tire-wheel assembly steering program illustrated by a flowchart in FIG. 9 each at a short cycle (for example, several milliseconds to several tens of milliseconds), so that the basic steering control and the steering control including a steered position change process described above are performed. To describe the steering control of the steering system, the flow of process according to those programs will be briefly described below.

In the process according to the steering integrated control program executed in the operation ECU 18, first, in S51, information on the tire-wheel assembly speed vw of each tire-wheel assembly 10 is received from each steering ECU 16, and in S52, the vehicle speed v of the vehicle is specified based on the tire-wheel assembly speed vw of each tire-wheel assembly 10. Next, in S53, the operation position $\delta$ of the steering wheel 56 is acquired based on the detection of the steering sensor 58, and in S54, the target steered positions $\psi_F^*$ of the front tire-wheel assemblies 10F and the target steered positions $\psi_R^*$ of the rear tire-wheel assemblies 10R are determined based on the acquired operation position $\delta$ and the specified vehicle speed v. Then, in S55, the target motor rotation angles $\theta^*$ for the steering motors 46a of the tire-wheel assembly steering devices 12 are determined based on the target steered positions $\psi_F^*$ and the target steered positions $\psi_R^*$, and in S56, information on the actual motor rotation angle $\theta$ of the steering motor 46a of each tire-wheel assembly steering device 12 is received from each steering ECU 16. In the following S57, the motor rotation angle deviation $\Delta\theta$ for each steering motor 46a is determined, and in S58, the target steering torques $Tq_{FL}^*$, $Tq_{FR}^*$, $Tq_{RL}^*$, $Tq_{RR}^*$ for the steering motors 46a of the tire-wheel assembly steering devices 12 are determined according to the above equation.

In the next S59, the lateral acceleration Gy is acquired based on the detection of the lateral acceleration sensor 68, and in S60, it is determined whether the lateral acceleration Gy is larger than the threshold acceleration Gyo. When it is determined that the lateral acceleration Gy is larger than the threshold acceleration Gyo, the steered position change process starting from S61 is executed, and when it is determined that the lateral acceleration Gy is equal to or smaller than the threshold acceleration Gyo, the steered position change process is skipped.

In the steered position change process, the turning direction of the vehicle is specified in S61 based on the acquired operation position $\delta$ of the steering wheel 56, and in S62, whether the specified turning direction of the vehicle is the left direction or the right direction is determined. When the vehicle is turning left, the target steering torque $Tq_{FR}^*$ of the right front tire-wheel assembly 10FR is reduced by the front tire-wheel assembly side torque change amount $dTq_F$ in S63, and the target steering torque $Tq_{RR}^*$ of the right rear tire-wheel assembly 10RR is increased by the rear tire-wheel assembly side torque change amount $dTq_R$ in S64. When the vehicle is turning right, the target steering torque $Tq_{FL}^*$ of the left front tire-wheel assembly 10FL is reduced by the front tire-wheel assembly side torque change amount $dTq_F$ in S65, and the target steering torque $Tq_{RL}^*$ of the left rear tire-wheel assembly 10RL is increased by the rear tire-wheel assembly side torque change amount $dTq_R$ in S66.

The target steering torques $Tq_{FL}^*$, $Tq_{FR}^*$, $Tq_{RL}^*$, and $Tq_{RR}^*$ for the steering motors 46a of the tire-wheel assembly steering devices 12 determined in S58 or changed in S63 to S66 are respectively transmitted to the steering ECUs 16 as information in S67.

In the process according to the tire-wheel assembly steering program executed in each steering ECU16, first, in S71, the tire-wheel assembly speed vw is specified based on the actual motor rotation angle $\theta$ of the steering motor 46a. Then, information on the tire-wheel assembly speed vw is transmitted to the operation ECU 18 in S72, and information on the actual motor rotation angle $\theta$ is transmitted to the operation ECU 18 in S73.

In the next S74, information on the target steering torque Tq* is acquired from the operation ECU 18, and in S75, the target supply current I*, which is the current to be supplied to the steering motor 46a, is determined based on the target steering torque Tq*. Then, in S76, the current I based on the target supply current I* is supplied to the steering motor 46a.

Modification

The steering system of the second embodiment is configured such that when the turning is severe, the steered position $\psi$ of one of the right and left front tire-wheel assemblies 10F and the steered position $\psi$ of one of the right and left rear tire-wheel assemblies 10R are changed. However, the steering system according to the present invention may be configured such that the steered position $\psi$ of only one of the right and left rear tire-wheel assemblies 10R is changed.

Both the steering system of the first embodiment and the steering system of the second embodiment are configured such that when the turning is severe, the steered position $\psi$ of the tire-wheel assembly 10 is changed by changing the target steering torque Tq*. However, the steering system of the present invention may be configured such that the steered position $\psi$ of the tire-wheel assembly 10 is changed by changing one or more of the target steered position $\psi^*$, the target motor rotation angle $\theta^*$, and the target supply current I*, for example.

Both the steering system of the first embodiment and the steering system of the second embodiment are configured such that the steered position $\psi$ of the turning outer tire-wheel assembly when turning is severe is changed. However, the steering system of the present invention may be configured such that the steered posi-

tion $\psi$ of the inner tire-wheel assembly is changed.

Both the steering system of the first embodiment and the steering system of the second embodiment are configured such that in the basic steering control, the target steering torque Tq* is determined based on the motor rotation angle deviation $\Delta\theta$, and the target supply current I* is determined based on the target steering torque Tq*. However, the steering system of the present invention may be configured such that the target supply current I* is directly determined based on the motor rotation angle deviation $\Delta\theta$.

In both the steering system of the first embodiment and the steering system of the second embodiment, the target steered positions $\psi$* of the right and left tire-wheel assemblies 10 that are determined in the basic steering control are not specifically mentioned. However, the steering system of the present invention may be configured such that the target steered positions $\psi$* of the right and left tire-wheel assemblies 10 are determined to be the same value according to the parallel geometry, for example, or different values according to the Ackermann geometry, for example.

## Claims

1. A vehicle steering system comprising:

   a first tire-wheel assembly steering device (12) configured to steer a left tire-wheel assembly (10FL; 10RL) of a vehicle;
   a second tire-wheel assembly steering device (12) configured to steer a right tire-wheel assembly (10FR; 10RR) of the vehicle; and
   a controller (16; 18) configured to

      determine a target steered position that is a steered position targeted to be realized in each of the right tire-wheel assembly (10FR; 10RR) and the left tire-wheel assembly (10FL; 10RL) based on a steering request to the vehicle,
      control the first tire-wheel assembly steering device (12) and the second tire-wheel assembly steering device (12) such that the steered position of each of the right tire-wheel assembly (10FR; 10RR) and the left tire-wheel assembly (10FL; 10RL) matches the target steered position, wherein

   the controller (16; 18) is configured to execute, when a turning index indicating severity of turning exceeds a set threshold value, a steered position change process of changing a steered position of one of the right tire-wheel assembly (10FR; 10RR) and the left tire-wheel assembly (10FL; 10RL) such that turning characteristics of the vehicle have a stronger understeer tendency compared with a case where the turning index does not exceed the set threshold value.

2. The vehicle steering system according to claim 1, wherein the one of the right tire-wheel assembly (10FR; 10RR) and the left tire-wheel assembly (10FL; 10RL) is a turning outer tire-wheel assembly.

3. The vehicle steering system according to claim 1 or 2, wherein:

   the vehicle has four tire-wheel assemblies including right front, left front, right rear, and left rear tire-wheel assemblies (10FR; 10FL; 10RR; 10RL), and the right tire-wheel assembly (10FR; 10RR) and the left tire-wheel assembly (10FL; 10RL) represent the right front tire-wheel assembly (10FR) and the left front tire-wheel assembly (10FL); and
   the controller (16; 18) is configured to make a steered position of one of the right front tire-wheel assembly (10FR) and the left front tire-wheel assembly (10FL) smaller in the steered position change process.

4. The vehicle steering system according to claim 1 or 2, wherein:

   the vehicle has four tire-wheel assemblies including right front, left front, right rear, and left rear tire-wheel assemblies (10FR; 10FL; 10RR; 10RL), and the right tire-wheel assembly (10FR; 10RR) and the left tire-wheel assembly (10FL; 10RL) represent the right rear tire-wheel assembly (10RR) and the left rear tire-wheel assembly (10RL); and
   the controller (16; 18) is configured to make a steered position of one of the right tire-wheel assembly (10RR) and the left rear tire-wheel assembly (10RL) larger in the steered position change process.

5. The vehicle steering system according to any one of claims 1 to 4, wherein the controller (16; 18) is configured to control steering forces generated by the first tire-wheel assembly steering device (12) and the second tire-wheel assembly steering device (12) to perform a control such that the steered position of each of the right tire-wheel assembly (10RR) and the left tire-wheel assembly (10RL) matches the target steered position.

6. The vehicle steering system according to claim 5 wherein:

   the first tire-wheel assembly steering device (12) includes a first electric motor (46a) serving as a drive source and a first motion conversion mechanism (54) configured to convert a motion of first the electric motor (46a) into a steering motion of the tire-wheel assembly (10FL; 10RL); the second tire-wheel assembly steering device (12) includes a second electric motor (46a) serving as a drive source and a second motion conversion mechanism (54) configured to convert a motion of the second electric motor (46a) into a steering motion of the tire-wheel assembly (10FR; 10RR); and the controller (16; 18) is configured to control a supply current to each of the first electric motor (46a) and the second electric motor (46a) to control the steering forces generated by the first tire-wheel assembly steering device (12) and the second tire-wheel assembly steering device (12).

7. The vehicle steering system according to claim 5 or 6, wherein the controller (16; 18) is configured to change a steering force of the first tire-wheel assembly steering device (12) or the second tire-wheel assembly steering device (12) that is configured to steer one of the right tire-wheel assembly (10FR; 10RR) and the left tire-wheel assembly (10FL; 10RL) so as to change the steered position of the one of the right tire-wheel assembly (10FR; 10RR) and the left tire-wheel assembly (10FL; 10RL) in the steered position change process.

8. The vehicle steering system according to any one of claims 1 to 7, wherein the controller (16; 18) is configured to:

> compare steering forces generated by the first tire-wheel assembly steering device (12) and the second tire-wheel assembly steering device (12); and
> recognize, as a turning outer tire-wheel assembly, a tire-wheel assembly (10FR; 10RR; 10FL; 10RL) steered by one of the first tire-wheel assembly steering device (12) and the second tire-wheel assembly steering device (12), the one of the first tire-wheel assembly steering device (12) and the second tire-wheel assembly steering device (12) generating a larger steering force.

9. The vehicle steering system according to any one of claims 1 to 8, wherein the turning index is a difference between steering force generated by the first tire-wheel assembly steering device (12) and steering force generated by the second tire-wheel assembly steering device (12).

10. The vehicle steering system according to any one of claims 1 to 9, wherein the controller (16; 18) is able to change the set threshold value.

11. The vehicle steering system according to any one of claims 1 to 10, wherein the controller (16; 18) is able to change a change amount of the steered position of one of the right tire-wheel assembly (10FR; 10RR) and the left tire-wheel assembly (10FR; 10RR) in the steered position change process.

# FIG. 1

# FIG. 2

# FIG. 3

# FIG. 4

```
        ┌─────────────────────────────┐
        │   STEERING INTEGRATED       │
        │   CONTROL PROGRAM           │
        └─────────────────────────────┘
                      │
S1        ╱───────────────────────╲        YES
      ╱─────  VEHICLE AUTONOMOUSLY  ─────╲──────────┐
      ╲        DRIVEN?              ╱                │
        ╲───────────────────────╱                   │
                   │ NO                              │
        ┌─────────────────────────────┐             │
S2      │ ACQUIRE OPERATION POSITION δ │             │
        └─────────────────────────────┘             │
                      │                              │
        ┌─────────────────────┐  ┌──────────────────────────┐
S3      │  DETERMINE TARGET    │ S4│   RECEIVE TARGET         │
        │  STEERED POSITION ψ* │  │ STEERED POSITION ψ*       │
        └─────────────────────┘  └──────────────────────────┘
                      │◄───────────────────────────┘
        ┌─────────────────────────────┐
S5      │  DETERMINE TARGET MOTOR      │
        │  ROTATION ANGLE θ*           │
        └─────────────────────────────┘
                      │
        ┌─────────────────────────────┐
S6      │  RECEIVE ACTUAL MOTOR        │
        │  ROTATION ANGLE θ            │
        └─────────────────────────────┘
                      │
        ┌─────────────────────────────┐
S7      │  DETERMINE MOTOR             │
        │ ROTATION ANGLE DEVIATION Δθ  │
        └─────────────────────────────┘
                      │
        ┌─────────────────────────────┐
S8      │  DETERMINE TARGET            │
        │ STEERING TORQUES TqL*, TqR*  │
        └─────────────────────────────┘
                      │
        ┌─┬─────────────────────────┬─┐
S9      │ │  STEERED POSITION       │ │
        │ │  CHANGE PROCESS         │ │
        └─┴─────────────────────────┴─┘
                      │
        ┌─────────────────────────────┐
S10     │  TRANSMIT TARGET            │
        │ STEERING TORQUES TqL*, TqR*  │
        └─────────────────────────────┘
                      │
              ┌──────────────┐
              │     END      │
              └──────────────┘
```

# FIG. 5

```
┌─────────────────────────────┐
│   TIRE-WHEEL ASSEMBLY       │
│   STEERING PROGRAM          │
└─────────────────────────────┘
              │
┌─────────────────────────────┐
│   TRANSMIT ACTUAL MOTOR     │
│   ROTATION ANGLE θ          │   S11
└─────────────────────────────┘
              │
┌─────────────────────────────┐
│   DETECT ACTUAL             │
│   SUPPLY CURRENT I          │   S12
└─────────────────────────────┘
              │
┌─────────────────────────────┐
│   TRANSMIT ACTUAL           │
│   STEERING TORQUE Tq        │   S13
└─────────────────────────────┘
              │
┌─────────────────────────────┐
│   RECEIVE TARGET            │
│   STEERING TORQUE Tq*       │   S14
└─────────────────────────────┘
              │
┌─────────────────────────────┐
│   DETERMINE TARGET          │
│   SUPPLY CURRENT I*         │   S15
└─────────────────────────────┘
              │
┌─────────────────────────────┐
│   SUPPLY CURRENT TO         │
│   STEERING MOTOR            │   S16
└─────────────────────────────┘
              │
┌─────────────────────────────┐
│            END              │
└─────────────────────────────┘
```

# FIG. 6

```
┌─────────────────────────────────┐
│  STEERED POSITION CHANGE        │
│  PROCESS SUBROUTINE             │
└─────────────────────────────────┘
```

S21 | RECEIVE ACTUAL STEERING TORQUES $Tq_L$, $Tq_R$

S22 ⟨ SPORTS MODE? ⟩ —NO→

YES

S23 | THRESHOLD TORQUE DIFFERENCE $\Delta Tq_O = \Delta Tq_S$

S24 | $\Delta Tq_O = \Delta Tq_C$

S25 ⟨ $| Tq_L - Tq_R | > \Delta Tq_O$? ⟩ NO

YES

S26 | ACQUIRE FRONT-REAR ACCELERATION $Gx$

S27 ⟨ $Gx < Gx_B$? ⟩ —NO→

YES

S28 | STEERING TORQUE CHANGE AMOUNT $dTq = dTq_B$

S29 ⟨ $Gx > Gx_A$? ⟩ —NO→

YES

S30 | STEERING TORQUE CHANGE AMOUNT $dTq = dTq_A$

S31 | $dTq = dTq_N$

S32 ⟨ DETERMINE TURNING OUTER TIRE-WHEEL ASSEMBLY $Tq_L > Tq_R$? ⟩ —NO→

YES

S33 | $Tq_L{}^* = Tq_L{}^* - dTq$

S34 | $Tq_R{}^* = Tq_R{}^* - dTq$

```
┌──────────┐
│  RETURN  │
└──────────┘
```

*1 SPORTS MODE VALUE $\Delta Tq_S$ > COMFORT MODE VALUE $\Delta Tq_C$

*2 NORMAL VALUE $dTq_N$ > ACCELERATION VALUE $dTq_A$ > DECELERATION VALUE $dTq_B$

# FIG. 7

# FIG. 8

```
  ┌─────────────────────────────┐
  │  STEERING INTEGRATED        │
  │  CONTROL PROGRAM            │
  └─────────────────────────────┘
```

S51 — RECEIVE TIRE-WHEEL ASSEMBLY SPEED vw

S52 — SPECIFY VEHICLE SPEED v

S53 — ACQUIRE OPERATION POSITION $\delta$

S54 — DETERMINE TARGET STEERED POSITIONS $\psi_F^*$, $\psi_R^*$

S55 — DETERMINE TARGET MOTOR ROTATION ANGLE $\theta^*$

S56 — RECEIVE ACTUAL MOTOR ROTATION ANGLE $\theta$

S57 — DETERMINE MOTOR ROTATION ANGLE DEVIATION $\Delta\theta$

S58 — DETERMINE TARGET STEERING TORQUES $Tq_{FL}^*$, $Tq_{FR}^*$, $Tq_{RL}^*$, $Tq_{RR}^*$

S59 — ACQUIRE LATERAL ACCELERATION Gy

S60 — $| Gy | > Gy_0$? — NO / YES

STEERED POSITION CHANGE PROCESS

S61 — SPECIFY TURNING DIRECTION BASED ON OPERATION POSITION $\delta$

S62 — LEFT TURN? — YES / NO

S63 — $Tq_{FR}^* = Tq_{FR}^* - dTq_F$

S64 — $Tq_{RR}^* = Tq_{RR}^* + dTq_R$

S65 — $Tq_{FL}^* = Tq_{FL}^* - dTq_F$

S66 — $Tq_{RL}^* = Tq_{RL}^* + dTq_R$

S67 — TRANSMIT TARGET STEERING TORQUES $Tq_{FL}^*$, $Tq_{FR}^*$, $Tq_{RL}^*$, $Tq_{RR}^*$

```
  ┌─────────┐
  │   END   │
  └─────────┘
```

# FIG. 9

```
                TIRE-WHEEL ASSEMBLY
                 STEERING PROGRAM

        ┌──────────────────────────────┐
  S71   │    SPECIFY TIRE-WHEEL        │
        │    ASSEMBLY SPEED vw         │
        └──────────────────────────────┘

        ┌──────────────────────────────┐
  S72   │    TRANSMIT TIRE-WHEEL       │
        │    ASSEMBLY SPEED vw         │
        └──────────────────────────────┘

        ┌──────────────────────────────┐
  S73   │    TRANSMIT ACTUAL MOTOR     │
        │    ROTATION ANGLE θ          │
        └──────────────────────────────┘

        ┌──────────────────────────────┐
  S74   │       RECEIVE TARGET         │
        │    STEERING TORQUE Tq*       │
        └──────────────────────────────┘

        ┌──────────────────────────────┐
  S75   │      DETERMINE TARGET        │
        │    SUPPLY CURRENT I*         │
        └──────────────────────────────┘

        ┌──────────────────────────────┐
  S76   │     SUPPLY CURRENT TO        │
        │     STEERING MOTOR           │
        └──────────────────────────────┘

                    END
```

Europäisches
Patentamt

European
Patent Office

Office européen
des brevets

# EUROPEAN SEARCH REPORT

Application Number

EP 20 21 7897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2015 011621 B4 (AUDI AG) 25 April 2019 (2019-04-25) * paragraphs [0015], [0036] - [0039], [0042], [0046], [0050]; figures * ----- | 1-11 | INV. B62D5/04 B62D6/00 |
| A | EP 1 669 275 A1 (RENAULT SAS [FR]) 14 June 2006 (2006-06-14) * paragraphs [0019] - [0037], [0043] - [0049]; figures * ----- | 1-7 | |
| A,D | JP 2009 101858 A (NSK LTD) 14 May 2009 (2009-05-14) * paragraphs [0012] - [0018], [0020]; figures 1,2,4 * ----- | 1-3,5-7 | |
| | | | **TECHNICAL FIELDS SEARCHED (IPC)** |
| | | | B62D |

The present search report has been drawn up for all claims

| Place of search | Date of completion of the search | Examiner |
|---|---|---|
| The Hague | 10 June 2021 | Kulozik, Ehrenfried |

EPO FORM 1503 03.82 (P04C01)

## ANNEX TO THE EUROPEAN SEARCH REPORT
## ON EUROPEAN PATENT APPLICATION NO.

EP 20 21 7897

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2021

| Patent document cited in search report | Publication date | Patent family member(s) | Publication date |
|---|---|---|---|
| DE 102015011621 B4 | 25-04-2019 | NONE | |
| EP 1669275 A1 | 14-06-2006 | AT 411208 T | 15-10-2008 |
| | | EP 1669275 A1 | 14-06-2006 |
| | | FR 2878806 A1 | 09-06-2006 |
| JP 2009101858 A | 14-05-2009 | JP 5125403 B2 | 23-01-2013 |
| | | JP 2009101858 A | 14-05-2009 |

EPO FORM P0459

For more details about this annex : see Official Journal of the European Patent Office, No. 12/82

**EP 3 889 005 A1**

REFERENCES CITED IN THE DESCRIPTION

**Patent documents cited in the description**

- JP 2009101858 A